# EUROPÄISCHE PATENTSCHRIFT

(11) **EP 1 186 882 B1**
(45) Veröffentlichungstag und Bekanntmachung des Hinweises auf die Patenterteilung: **16.11.2016**
(21) Anmeldenummer: 01121048.1
(22) Anmeldetag: 03.09.2001
(51) Int. Cl.: G01N 21/64, G02B 21/00

(54) **Verfahren und Vorrichtung zur Detektion von Fluoreszenzlicht bei der konfokalen Rastermikroskopie**
Method and apparatus for the detection of fluorescence light in confocal scanning microscopy
Procédé et dispositif pour la détection de lumière fluorescente dans la microscopie confocale à balayage

(30) Priorität: 07.09.2000 DE 10044308
(43) Veröffentlichungstag der Anmeldung: 13.03.2002
(73) Patentinhaber: Leica Microsystems CMS GmbH, 35578 Wetzlar (DE)
(72) Erfinder: Engelhardt, Johann, Dr., 76669 Bad Schönborn (DE); Hoffmann, Jürgen, Dr., 65191 Wiesbaden (DE)
(74) Vertreter: Patent- und Rechtsanwälte Ullrich & Naumann

(56) Entgegenhaltungen:
- EP-A- 0 753 779
- EP-A1- 0 666 473
- DE-A- 4 414 940
- DE-A- 10 042 840
- DE-A- 19 733 195
- DENK W ET AL: "TWO-PHOTON MOLECULAR EXCITATION IN LASER-SCANNING MICROSCOPY" HANDBOOK OF BIOLOGICAL CONFOCAL MICROSCOPY, NEW YORK, PLENUM, US, 1995, Seiten 445-448, XP001040853 ISBN: 0-306-44826-2

## Beschreibung

Die vorliegende Erfindung betrifft ein Verfahren und eine Vorrichtung zur Detektion von Fluoreszenzlicht bei der Rastermikroskopie, insbesondere bei der konfokalen Rastermikroskopie, wobei fluoreszierende Materialien durch Mehrphotonenanregung zur Fluoreszenz angeregt werden.

Verfahren bzw. Vorrichtungen der gattungsbildenden Art sind seit geraumer Zeit aus der Praxis bekannt. In der Rastermikroskopie wird ein Objekt mit einem Lichtstrahl beleuchtet, um das von der Probe emittierte Reflexision- und/oder Fluoreszenzlicht zu detektieren. Bei der Mehrphotonen-Rastermikroskopie werden Fluoreszenzphotonen detektiert, die auf einen Mehrphotonenanregungsprozess zurückzuführen sind, bei dem der Übergang von einem Zustand eines Fluorochroms in den angeregten Zustand durch die simultane Absorption mehrerer Photonen erfolgt. Die Wahrscheinlichkeit eines N-Photonenübergangs ist von der N-ten Potenz der Anregungslichtleistung des Beleuchtungslichts abhängig. Zum Erzielen hoher Lichtleistungen wird üblicherweise das zur Beleuchtung dienende Anregungslicht gepulst.

Lediglich beispielhaft wird auf die US 5 034 613 bzw. DE 44 14 940 hingewiesen, aus denen konfokale Rastermikroskope bekannt sind, bei denen ein Objekt mit einem fokussierten Lichtstrahl angeregt wird, wobei hier Zweiphotontenübergänge mit gepulstem Licht erfolgen. Die Pulsdauern der einzelnen Pulse beträgt Femptosekunden bzw. Picosekunden.

Die gattungsbildenden Verfahren bzw. Vorrichtungen sind jedoch im Hinblick auf die erzielbare Fluoreszenzphotonenausbeute sehr ineffizient, was unterschiedliche Ursachen hat. Zum einen kann die Fluoreszenzphotonenausbeute durch Erhöhung der Beleuchtungslichtleistung nicht beliebig gesteigert werden. Sobald die Sättigungsleistung der Floureszenzmarker erreicht ist, werden mit einem Laserpuls sämtliche Fluoreszenzmarker zur Fluoreszenz angeregt. Eine weitere Steigerung der Beleuchtungsleistung würde sich dann nachteilig im Hinblick auf das Bleichverhalten der Fluoreszenzmarker auswirken sowie eine thermische Belastung des Objekts nach sich ziehen. Weitere Ausführungen zur Zweiphotonenanregung von fluoreszierenden Objekten werden in dem Artikel "Two-Photon Molecular Excitation in Laser-Scanning Microscopy" von W. Denk, D. W. Piston und W. W. Webb in: "Handbook of Biological confocal microscopy", 1995, Editor: J. B. Pawley, 445-458 gemacht.

Weiterhin sind für sich gesehen aus den DE 196 53 413 und EP 0 753 779 bzw. DE 44 37 896 C1 Anordnungen bekannt, bei denen ein Objekt mit Hilfe einer rotierenden Mikrolinsenscheibe bzw. einer Reflexionsscheibe in ca. 20-50 Objektpunkte simultan mit Anregungslicht beleuchtet wird.

Der vorliegenden Erfindung liegt daher die Aufgabe zugrunde, ein Verfahren und eine Vorrichtung der gattungsbildenden Art derart auszugestalten und weiterzubilden, dass die Fluoreszenzphotonenausbeute der fluoreszierenden Materialien, die durch Mehrphotonenanregung zur Fluoreszenz angeregt werden, optimiert bzw. gesteigert wird, um eine optimale Objektdetektion zu ermöglichen.

Das erfindungsgemäße Verfahren der gattungsbildenden Art löst die voranstehende Aufgabe durch die kennzeichnenden Merkmale des Patentanspruchs 1.

Ferner wird obige Aufgabe durch eine Vorrichtung mit den Merkmalen des kennzeichnenden Teils des Patentanspruchs 9 gelöst.

Erfindungsgemäß ist zunächst erkannt worden, dass die Fluoreszenzphotonenausbeute des Fluoreszenzlichts der mit Hilfe von Mehrphotonenanregungsprozessen induzierten Fluoreszenzanregung von mehreren Einflussgrößen abhängt. So sind die Eigenschaften der die Mehrphotonenanregung bewirkenden Lichtquelle, die Systemparamer des konfokalen Rastermikroskops sowie die Eigenschaften der fluoreszierenden Materialien ausschlaggebend. Erst wenn alle die sich auf die Fluoreszenzphotonenausbeute auswirkenden Einflüsse auf- einander abgestimmt bzw. angepasst sind, kann eine optimierte Fluoreszenzanregung bzw -lichtdetektion erfolgen.

Als mögliche Eigenschaft der fluoreszierenden Materialien, an die eine Anpassung der Betriebsparamer der die Mehrphotonenanregung bewirkenden Lichtquelle und/oder der Systemparameter des konfokalen Rastermikroskops erfolgen könnte, ist die Lebensdauer der angeregten Zustände der fluoreszierenden Materialien vorgesehen. Weiterhin ist eine Anpassung an den Wirkungsquerschnitt der Anregung der fluoreszierenden Materialien, an die Anregungs- und/oder Emissionswellenlänge und/oder eine Anpassung an das Bleichverhalten der fluoreszierenden Materialien vorgesehen. Insoweit sind dies die wichtigsten Eigenschaften der fluoreszierenden Materialien, an die die Mehrphotonenanregung bewirkende Lichtquelle bzw. die Systemparamer des konfokalen Rastermikroskops anzupassen sind.

Zur Veränderung der Betriebsparameter der die Mehrphotonenanregung bewirkenden Lichtquelle ist eine Vielzahl von Verfahrensvarianten vorgesehen, die im folgenden näher ausgeführt werden.

Zum einen könnte die Leistung der Lichtquelle entsprechend eingestellt werden. Hierbei wäre die Leistung der Lichtquelle größer oder gleich der Leistung zu wählen, die der Sättigungleistung der fluoreszierenden Materialien entspricht. Insbesonders bei der konfokalen Rastermikroskopie hängt die Sättigungsleistung der fluoreszierenden Materialien von dem zur Mehrphotonenanregung der Fluoreszenzmaterialien verwendeten Beleuchtungsmuster ab, da mit zunehmendem Beleuchtungsvolumen die in das konfokale Rastermikroskop einzubringende Lichtleistung entsprechend anwächst.

Zur optimalen Anregung der fluoreszierenden Materialien könnte weiterhin die Pulsdauer des die Lichtquelle emittierenden Lichts entsprechend eingestellt werden. Zur Beeinflussung der Pulsdauer des die Lichtquelle emittierenden Lichts könnte eine Prechrip-Unit eingesetzt werden, wie sie beispielsweise aus der DE 44 37 896 C1 bekannt ist. Mit dieser Prechrip-Unit werden insbesondere Lichtpulse, die aufgrund von Wechselwirkungen mit optischen Komponenten wie z.B. Glasfasern oder Linsen eine Pulsverbreiterung erfahren haben, wieder zu ihrer ursprünglichen Pulsdauer komprimiert. Diese Prechrip-Unit könnte jedoch in besonders vorteilhafter Weise zur Beeinflussung der Pulsdauer des die Lichtquelle emittierten Lichts verwendet werden, um die Fluoreszenzphotonenausbeute der fluoreszierenden Materialien zu optimieren.

In besonders vorteilhafter Weise ist vorgesehen, dass die Pulsrepetitionsrate des die Lichtquelle emittierenden Lichts entsprechend eingestellt wird. Insbesondere ist die Pulsrepetitionsrate des von der Lichtquelle emittierten Lichts in Abhängigkeit der Lebensdauer der angeregten Zustände der fluoresziereden Materialien sowie von deren Sättigungsverhalten abhängig einzustellen oder gegebenenfalls zu variieren. Üblicherweise werden für Zweiphotonenanregungen fluoreszierender Materialien Pulsrepetitionsraten von 75-100 MHz verwendet, die Verwendung von Pulsrepetitionsraten in Bereichen von kHz bis hin zu GHz kann zur optimalen Fluoreszenzphotonenausbeute dienlich sein.

Eine Veränderung der Pulsrepetitionsrate könnte bei modenverkoppelten Lichtquellen dadurch erreicht werden, dass die Resonatorlänge der Lichtquelle verändert wird. Bei einer Verringerung der Resonatorlänge würde sich eine Erhöhung der Pulsrepetitionsrate ergeben, was beispielsweise mit einem Titan:Saphir-Laser erzielt werden kann. Eine Resonatorlänge im cm-Bereich würde eine Pulsrepetitionsrate von einigen GHz ergeben. Eine entsprechende Vergrößerung der Resontatorlänge würde dementsprechend die Pulsrepetitionsrate herabsetzen. Alternativ könnte eine Vervielfachung der Pulsrepetitionsrate bei aktiv modenverkoppelten Lichtquellen dadurch erzielt werden, dass mehrere Pulse gleichzeitig in Resonator umherlaufen. Hierzu wäre die Steuerung der aktiven Modenverkopplung entsprechend einzustellen, so dass hierdurch beispielsweise eine um das 8-fach vergrößerte Pulsrepetitionsrate erzielt werden kann.

Wenn die Optimierung der Fluoreszenzphotonenausbeute der fluoreszierenden Materialien durch die Wahl einer geeigneten Pulsrepetitionsrate bewirkt werden soll, wird hierzu im Allgemeine eine bestimmte Art der Lichtquelle zu wählen sein, die Pulsrepetitionsraten aufweist, die in dem gewünschten Bereich liegen.

Beispielsweise könnte als Lichtquelle ein Pulslaser mit Güteschaltung verwendet werden. Bei einem solchen Laser wird die Erzeugung der Lichtpulse durch eine entsprechende Güteschaltung realisiert, die ihrerseits über einen bestimmten Bereich verändert werden kann, so dass auch durch eine Variation der Güteschaltung die Pulsrepetitionsrate dieser Art von Lichtquellen an die Anregungseingenschaften der fluoreszierenden Materialien angepasst werden kann.

Weiterhin könnten als Lichtquelle modeverkoppelte Lasersysteme verwendet werden, insbesondere könnten Titan:Saphir-Laser zum Einsatz kommen. Falls zur optimalen Anregung der fluoreszierenden Materialien die benötigte Lichtleistung höher ist als die Lichtleistung, die modenverkoppelte Lasersysteme üblicherweise erbringen, könnte dem modenverkoppelten Lasersystem ein regenerativer Verstärker nachgeordnet sein.

Weiterhin könnte als Lichtquelle für die Mehrphotonenanregung fluoreszierender Materialien ein Halbleiterlaser verwendet werden. Dieser Halbleiterlaser könnte durch Gain-Switching zum Pulsen gebracht werden. Hierdurch kann die Pulsrepetitionsrate des Halbleiterlasers vom Hz- bis in den GHz-Bereich eingestellt werden.

Eine alternative Lichtquelle könnte ein blitzlampengepumtes Lasersystem sein, das im Wesentlichen Pulsrepetitionsraten aufweist, die im Wesentlichen der Frequenz der Blitzlampe entsprechen.

In besonders vorteilhafter Weise könnte ein OPO (Optisch parametrischer Oszilator) oder ein OPA (Optisch parametrischer Amplifier) verwendet werden. Bei diesen Beleuchtungsystemen ist besonders vorteilhaft, dass die Wellenlänge und die Pulsrepetitionsrate des emittierten Lichts kontinuierlich variierbar ist, so dass hierdurch beispielsweise eine nahezu ideale Anpassung an den Absorptionswellenlängenbereich der fluoreszierenden Materialien möglich ist.

Hinsichtlich der Optimierung der Fluoreszenzphotonenausbeute der fluoreszierenden Materialien könnte bezüglich der Systemparameter des konfokalen Rastermikroskops zum einen der Dynamikbereich des Detektorsystems und/oder zum anderen die Pixelintegrationszeit des Detektorsystems entsprechend eingestellt werden. Hiermit hängt insbesondere auch die Bandbreite der Verstärkung der detektierten Signale sowie die Scangeschwindigkeit der Strahlablenkvorrichtung des konfokalen Rastermikroskops zusammen.

In besonders ganz vorteilhafter Weise ist zur Vermeidung der Sättigung der Anregung fluoreszierender Materialien in einem einzelnen Objektpunkt eine gleichzeitige Beleuchtung bzw. Anregung mehrerer Objektbereiche vorgesehen. Hierdurch kann von der Lichtquelle zur Mehrphotonenlichtquelle zur Verfügung stehende Anregungslichtleistung gleichzeitig auf mehrere Objektpunkte verteilt werden, wodurch die dort befindlichen fluoreszierenden Materialien simultan zur Fluoreszenz angeregt werden. Dies setzt eine entsprechende simultane Detektion dieser unterschiedlichen Objektbereiche voraus, die mit entsprechenden, aus dem Stand der Technik bekannten, Beleuchtungs- bzw. Detektionsverfahren erzielt werden kann. Beispielsweise könnte eine Beleuchtung mehrerer Fokuspunkte bzw. Objektbereiche mit Hilfe eines rotierenden Mikrolinsenrads, wie es aus der DE 196 53 413 oder der EP 0 753 779 bekannt ist, durchgeführt werden. Alternativ hierzu könnte eine Beleuchtung mit einem Reflektionsscheibenscanner, wie er aus der DE 44 37 896 C1 bekannt ist, erfolgen. Zur Detektion der durch eine solche Anordnung zur Anregung gebrachten Objektpunkte könnte im einfachsten Fall ein flächenförmiger Detektor dienen. Eine bzw. mehrere konfokale Detektionslochblenden können bei einer Mehrphotonenanregung entfallen, da eine Mehrphotonenanregung nur im Fokusbereich des Mikroskopobjektivs erfolgen kann, denn nur hier ist die Anregungsleistung der Lichtquelle hoch genug. Alternativ zur Beleuchtung mit mehreren Fokuspunkten könnte eine Beleuchtung mit einer Fokallinie vorgesehen sein, die beispielsweise ein schlitzförmiges Beleuchtungs- bzw. Detektionssystem verwendet. Hierbei ist jedoch das Auflösungsvermögen lediglich senkrecht zur Fokallinie konfokal, entlang der Fokallinie liegt ein Auflösungsvermögen vor, wie es in der konventionellen Mikroskopie gegeben ist.

Als fluoreszierende Materialien könnten Fluoreszenzfarbstoffe, caged-compundverbindungen und/oder Nanocrystals eingesetzt werden. Hierbei handelt es sich um fluoreszierende Materialien, wie sie üblicherweise im biomedizinischen Bereich bzw. im Bereich der biologischen/biochemischen Grundlagenforschung eingesetzt werden, wobei biologische Objekte spezifisch mit den fluoreszierenden Materialien mit Hilfe von beispielsweise Antikörper-Bindungen an komplementäre Objektbereiche gebunden werden können.

Zur Vermeidung von Wiederholungen hinsichtlich der für die Vorrichtung vorgesehenen Lichtquellen bzw. unterschiedlichen Beleuchtungsmodi wird auf den Beschreibungsteil betreffend des entsprechenden Verfahrensschritts verwiesen.

Es gibt nun verschiedene Möglichkeiten, die Lehre der vorliegenden Erfindung in vorteilhafter Weise auszugestalten und weiterzubilden. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung eines ersten Ausführungsbeispiels einer erfindungsgemäßen Vorrichtung und
- Fig.2: ein Diagramm, in dem die Fluoreszenzphotonenausbeute als Funktion der Repetitionsrate gezeigt ist.

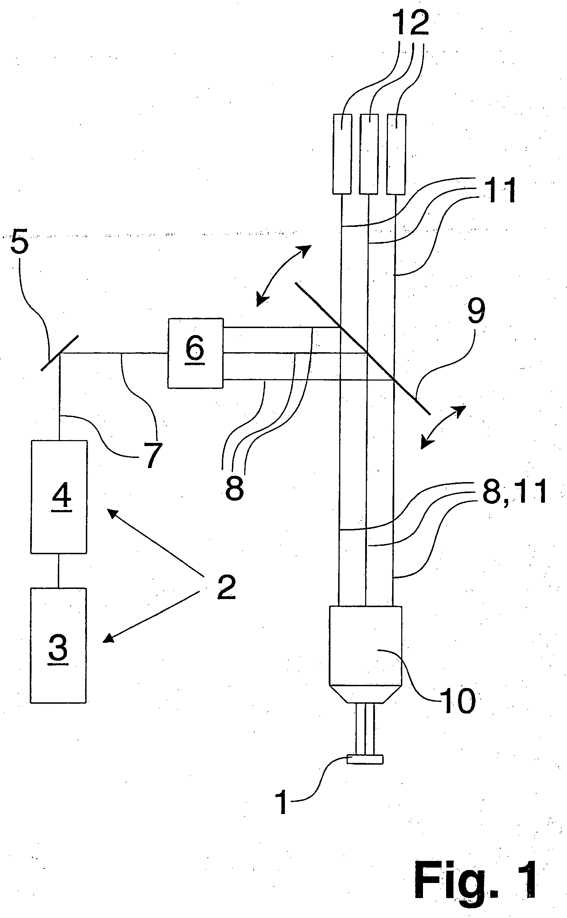

Fig. 1 zeigt eine Vorrichtung zur Detektion von Fluoreszenzlicht in Verbindung mit einem konfokalen Rastermikroskop, wobei fluoreszierende Materialien durch Mehrphotonenanregung zur Fluoreszenz angeregt werden. Hierbei ist das Objekt 1 spezifisch mit fluoreszierenden Materialien markiert.

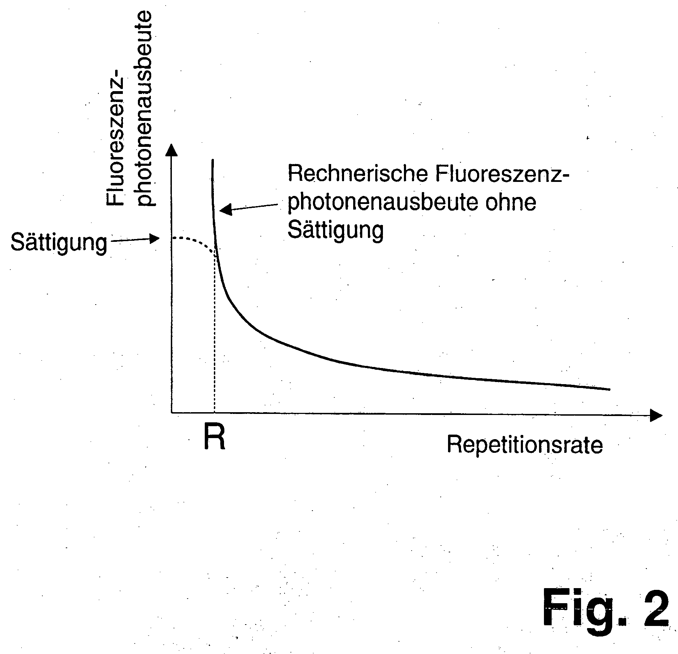

Zur optimalen Fluoreszenzphotonenausbeute sind die Betriebsparameter der die Mehrphotonenanregung bewirkenden Lichtquelle 2 und die Systemparameter des konfokalen Rastermikroskops auf die Eigenschaften der fluoreszierenden Materialien angepasst. Die Pulsrepetitionsrate der Lichtquelle 2 wird gemäß dem Diagramm aus Fig. 2 festgelegt. In diesem Diagramm ist die Fluoreszenzphotonenausbeute als Funktion der Pulsrepetitionsrate bei konstanter mittlerer Lichtleistung der Lichtquelle 2 gezeigt. Die Fluoreszenzphotonenausbeute ist als dicke durchgezogene Linie in dem Diagramm eingezeichnet. Da die Fluoreszenzphotonenausbeute bei einer kleineren Repetitionsrate und somit bei einer höheren Pulsleistung (die mittlere Lichtleistung der Lichtquelle 2 ist konstant) sich aufgrund dem Phänomen der Sättigung der fluoreszierenden Materialien nicht beliebig steigern lässt, ist die maximal erzielbare Fluoreszenzphotenausbeute gestrichelt eingezeichnet. Eine Verringerung der Pulsrepetitonsrate jenseits des Wertes R und damit eine Erhöhung der Leistung eines Pulses würde demgemäß keine Erhöhung der Fluoreszenzphotonenausbeute bewirken, so dass die Pulsrepetitionsrate der Lichtquelle 2 auf den Wert R eingestellt wird.

Die Lichtquelle 2 besteht aus einem Titan:Saphir-Laser 3 und einem dem Titan:Saphir-Laser 3 nachgeordneten regenerativen Verstärker 4.

Das von der Lichtquelle 2 emittierte Licht wird nach Reflektion an dem Spiegel 5 auf den Strahlaufspalter 6 geleitet. Der Strahlaufspalter 6 spaltet den Beleuchtungslichstrahl 7 in drei Beleuchtungsteilstrahlen 8 auf. Der kippbar angebrachte, als dichroitischer Strahlteiler ausgeführte Scanspiegel 9 reflektiert und lenkt aufgrund der Kippung die drei Beleuchtungsteilstrahlen 8 ab, so dass durch die Ablenkung des Scanspiegels 9 das Objekt 1 abgetastet werden kann. Die Ablenkung des Scanspiegels 9 erfolgt hierbei in zwei im Wesentlichen senkrecht zueinander stehenden Richtungen, von denen lediglich eine eingezeichnet ist. Durch die Aufspaltung des Beleuchtungslichtstrahls 7 in drei Beleuchtungsteilstrahlen 8 werden nach dem Fokussieren der drei Beleuchtungsteilstrahlen 8 durch das Mikroskopobjektiv 10 drei Objektbereiche gleichzeitig beleuchtet und die dort lokalisierten fluoreszierenden Materialien zu Fluoreszenz angeregt.

Das von den drei gleichzeitig beleuchteten Objektbereichen emittierte Fluoreszenzlicht 11, das vom Mikroskopobjektiv 10 aufgesammelt wird, passiert aufgrund seiner Wellenlänge den als Scanspiegel 9 ausgeführten dichroitischen Strahlteiler und kann von den drei Detektoren 12 detektiert werden.

Als fluoreszierende Materialien werden zur Zweiphotonenanregung geeignete Fluoreszenzfarbstoffe verwendet, die spezifisch an einzelne Objektbereiche des Objekts 1 angebunden sind.

## Patentansprüche

1. Verfahren zur Detektion von Fluoreszenzlicht (11) bei der insbesondere konfokalen Rastermikroskopie mit folgenden Verfahrensschritten:
- Beleuchten bzw. Anregen fluoreszierender Materialien mittels gepulster Laserlichtquelle durch Mehrphotonenanregung zur Fluoreszenz,
- Anpassen der Betriebsparameter der Laserlichtquelle (2) durch Einstellen und Variieren der Pulsdauer und der Pulsrepatitionsrate des von der Laserlichtquelle (2) emittierten Anregungslichts (7) in Abhängigkeit von der Lebensdauer der anregten Zustände und dem Sättigungsverhalten der fluoreszierenden Materialien,
- Verteilen der Anregungslichtleistung des gepulsten Anregungslichts (7) auf mehrere Objektbereiche durch gleichzeitiges Beleuchten bzw. Anregen der mehren Objektbereiche und
- gleichzeitiges Detektieren des Fluoreszenzlichts (11) der mehreren Objektbereiche.

2. Verfahren nach Anspruch 1, **dadurch gekennzeichnet, dass** eine Anpassung an die Lebensdauer der angeregten Zustände der fluoreszierenden Materialien, oder an den Wirkungsquerschnitt der Anregung der fluoreszierenden Materialien oder an die Anregungs- und/oder Emissionswellenlänge der fluoreszierenden Materialien, oder an das Bleichverhalten der fluoreszierenden Materialien, oder der Leistung der Lichtquelle (2) entsprechend, erfolgt.

3. Verfahren nach einem der Ansprüche 1 bis 2, **dadurch gekennzeichnet, dass** die Pulsdauer des die Lichtquelle (2) emittierenden Lichts (7) oder die Pulsrepetitionsrate des die Lichtquelle (2) emittierenden Lichts (7) entsprechend eingestellt wird.

4. Verfahren nach einem der Ansprüche 1 bis 3, **dadurch gekennzeichnet, dass** als Lichtquelle (2) ein modenverkoppeltes Lasersystem (3), insbesondere Titan:Saphir-Laser, verwendet wird.

5. Verfahren nach Anspruch 4, **dadurch gekennzeichnet, dass** dem modenverkoppelten Laser (3) ein regenerativer Verstärker (4) nachgeordnet ist.

6. Verfahren nach einem der Ansprüche 1 bis 5, **dadurch gekennzeichnet, dass** die Pixelintegrationszeit des Detektorsystems des konfokalen Rastermikroskops entsprechend eingestellt wird.

7. Verfahren nach Anspruch 1, **dadurch gekennzeichnet, dass** zur gleichzeitigen Beleuchtung mehrerer Fokuspunkte ein rotierendes Mikrolinsenrad oder ein Reflexionsscheibenscanner verwendet wird.

8. Verfahren nach Anspruch 1, **dadurch gekennzeichnet, dass** zur Beleuchtung einer Fokallinie ein schlitzförmiges Beleuchtungssystem verwendet wird.

9. Vorrichtung zur Detektion von Fluoreszenzlicht, mit einem Rastermikroskop, insbesondere einem konfokalen Rastermikroskop, wobei fluoreszierende Materialien in mehreren Objektbereichen durch Mehrphotonenranregung zur Fluoreszenz angeregt werden und einer Laserlichtquelle (2),
wobei Mittel zur Anpassung der Betriebsparameter der Laserlichtquelle (2) durch Einstellen und Variieren der Pulsdauer und Pulsrepetitionsrate des von der Laserlichtquelle (2) emittierten Anregungslichts (7) in Abhängigkeit von der Lebensdauer der angeregten Zustände und dem Sättigungsverhalten der fluoreszierenden Materialien, Mittel zum gleichzeitigen Beleuchten bzw. Anregen der mehreren Objektbereiche und Mittel zum gleichzeitigen Detektieren des Fluoreszenzlichts (11) von den mehreren Objektbereichen, vorgesehen sind.

10. Vorrichtung nach Anspruch 9, **dadurch gekennzeichnet, dass** als Lichtquelle (2) ein modenverkoppeltes Lasersystem (3), insbesondere Titan:Saphir-Laser, vorgesehen ist, und dass dem modenverkoppelten Laser (3) ein regenerativer Verstärker (4) nachgeordnet ist..

11. Vorrichtung nach Anspruch 9, **dadurch gekennzeichnet, dass** als Lichtquelle (2) ein Halbleiterlaser, oder ein blitzlampengepumptes Lasersystem, oder ein OPO (Optisch parametrischer Oszillator), oder ein OPA (Optisch parametrischer Amplifier) vorgesehen ist.

12. Vorrichtung nach einem der Ansprüche 9 bis 11, **dadurch gekennzeichnet, dass** Mittel zum gleichzeitigen Beleuchten bzw. Anregen mehrerer Fokuspunkte ein rotierendes Mikrolinsenrad oder einen Reflexionsscheibenscanner umfassen.

13. Vorrichtung nach einem der Ansprüche 9 bis 11, **dadurch gekennzeichnet, dass** Mittel zum gleichzeitigen Beleuchten bzw. Anregen eine Fokallinie erzeugt, die durch ein schlitzförmiges Beleuchtungssystem formbar ist.

## Claims

1. Method for detecting fluorescent light (11) in in particular confocal scanning microscopy, having the following method steps:
- illuminating or exciting fluorescent materials to fluorescence using a pulsed laser light source through multiphoton excitation,
- adapting the operating parameters of the laser light source (2) by adjusting and varying the pulse duration and the pulse repetition rate of the excitation light (7), which is emitted by the laser light source (2), in dependence on the life of the excited states and the saturation behaviour of the fluorescent materials,
- distributing the excitation light output of the pulsed excitation light (7) over a plurality of object regions by way of simultaneous illumination or excitation of the multiple object regions, and
- simultaneously detecting the fluorescent light (11) of the multiple object regions.

2. Method according to Claim 1, **characterized in that** an adaptation to the life of the excited states of the fluorescent materials or to the cross section of the excitation of the fluorescent materials or to the excitation and/or emission wavelength of the fluorescent materials or to the bleaching behaviour of the fluorescent materials or to the output of the light source (2) is correspondingly effected.

3. Method according to either of Claims 1 and 2, **characterized in that** the pulse duration of the light (7), which emits the light source (2), or the pulse repetition rate of the light (7), which emits the light source (2), is adjusted accordingly.

4. Method according to one of Claims 1 to 3, **characterized in that** a mode-locked laser system (3), in particular titanium-sapphire laser, is used as the light source (2).

5. Method according to Claim 4, **characterized in that** a regenerative amplifier (4) is arranged downstream of the mode-locked laser (3).

6. Method according to one of Claims 1 to 5, **characterized in that** the pixel integration time of the detector system of the confocal scanning microscope is adjusted accordingly.

7. Method according to Claim 1, **characterized in that** a rotating microlens wheel or a reflection disc scanner is used for simultaneously illuminating a plurality of focal points.

8. Method according to Claim 1, **characterized in that** a slot-type illumination system is used to illuminate a focal line.

9. Apparatus for detecting fluorescent light, having a scanning microscope, in particular a confocal scanning microscope, wherein fluorescent materials in a plurality of object regions are excited to fluorescence through multiphoton excitation, and a laser light source (2),
wherein means for adapting the operating parameters of the laser light source (2) by adjusting and varying the pulse duration and pulse repetition rate of the excitation light (7), which is emitted by the laser light source (2), in dependence on the life of the excited states and the saturation behaviour of the fluorescent materials, means for simultaneously illuminating or exciting the plurality of object regions, and means for simultaneously detecting the fluorescent light (11) from the plurality of object regions are provided.

10. Apparatus according to Claim 9, **characterized in that** a mode-locked laser system (3), in particular titanium-sapphire laser, is provided as the light source (2), and **in that** a regenerative amplifier (4) is arranged downstream of the mode-locked laser (3).

11. Apparatus according to Claim 9, **characterized in that** a semiconductor laser, or a flash pumped laser system, or an OPO (optically parametric oscillator), or an OPA (optically parametric amplifier) is provided as the light source (2).

12. Apparatus according to one of Claims 9 to 11, **characterized in that** means for simultaneously illuminating or exciting a plurality of focal points comprise a rotating microlens wheel or a reflection disc scanner.

13. Apparatus according to one of Claims 9 to 11, **characterized in that** means for simultaneous illumination or excitation produces a focal line which is shapable by a slot-type illumination system.

## Revendications

1. Procédé de détection de lumière fluorescente (1) lors de la microscopie à balayage notamment confocale, comportant les étapes de procédé suivantes :
- illuminer, resp. exciter des matériaux fluorescents au moyen d'une source de lumière laser à impulsions par excitation à photons multiples jusqu'à fluorescence,
- adapter les paramètres de fonctionnement de la source de lumière laser (2) en réglant et variant la durée d'impulsions et le taux de répétition des impulsions de la lumière d'excitation (7) émise par la source de lumière laser (2) en fonction de la durée de vie des états excités et du comportement de saturation des matériaux fluorescents,
- répartir la puissance de lumière d'excitation de la lumière d'excitation à impulsions (7) sur plusieurs zones d'objet en illuminant, resp. excitant simultanément les plusieurs zones d'objet et
- détecter simultanément la lumière fluorescente (11) des plusieurs zones d'objet.

2. Procédé selon la revendication 1, **caractérisé en ce qu'**une adaptation a lieu de manière correspondante à la durée de vie des états excités des matériaux fluorescents ou à la section efficace de l'excitation des matériaux fluorescents ou à la longueur d'onde d'excitation et/ou d'émission des matériaux fluorescents, ou au comportement de blanchiment des matériaux fluorescents, ou à la puissance de la source lumineuse (2).

3. Procédé selon l'une des revendications 1 à 2, **caractérisé en ce que** la durée d'impulsion de la lumière (7) émettant la source de lumière (2) ou le taux de répétition d'impulsion de la lumière (7) émettant la source de lumière (2) est réglé(e) de manière correspondante.

4. Procédé selon l'une des revendications 1 à 3, **caractérisé en ce que** l'on utilise comme source de lumière (2) un système laser (3) couplé par mode, notamment un laser titane saphir.

5. Procédé selon la revendication 4, **caractérisé en ce qu'**un amplificateur régénératif (4) est disposé en aval du laser couplé par mode (3).

6. Procédé selon l'une des revendications 1 à 5, **caractérisé en ce que** le temps d'intégration des pixels du système détecteur du microscope à balayage confocal est réglé de manière correspondante.

7. Procédé selon la revendication 1, **caractérisé en ce que** pour illuminer simultanément plusieurs points focaux, une roue à microlentille rotative ou un scanner à vitrage réfléchissant est utilisé(e).

8. Procédé selon la revendication 1, **caractérisé en ce que** pour illuminer une ligne focale, un système d'illumination en forme de fente est utilisé.

9. Dispositif de détection de lumière fluorescente, comportant un microscope à balayage, notamment un microscope à balayage confocal, dans lequel des matériaux fluorescents dans plusieurs zones d'objet sont excités par excitation à photons multiples jusqu'à la fluorescence et une source de lumière laser (2), dans lequel des moyens pour adapter les paramètres de fonctionnement de la source de lumière laser (2) en réglant et variant la durée d'impulsion et le taux de répétition des impulsions de la lumière d'excitation (7) émise par la source de lumière laser (2) en fonction de la durée de vie des états excités et du comportement de saturation des matériaux fluorescents, des moyens pour illuminer, resp. exciter simultanément les plusieurs zones d'objet et des moyens pour détecter simultanément la lumière fluorescente (11) des plusieurs zones d'objet, sont prévus.

10. Dispositif selon la revendication 9, **caractérisé en ce que** l'on prévoit comme source de lumière (2) un système laser couplé par mode (3), notamment un laser titane saphir, et **en ce qu'**un amplificateur régénératif (4) est disposé en aval du laser couplé par mode (3).

11. Dispositif selon la revendication 9, **caractérisé en ce que** l'on prévoit comme source de lumière (2), un laser à semi-conducteurs ou un système de laser pompé par lampe flash ou un OPO (oscillateur paramétrique optique) ou un OPA (amplificateur paramétrique optique).

12. Dispositif selon l'une des revendications 9 à 11, **caractérisé en ce que** des moyens pour illuminer, resp. exciter simultanément plusieurs points focaux comprennent une roue à microlentille rotative ou un scanner à vitrage réfléchissant.

13. Dispositif selon l'une des revendications 9 à 11, **caractérisé en ce qu'**un moyen pour illuminer, resp. exciter simultanément génère une ligne focale, qui peut être formée par un système d'illumination en forme de fente.
